# FASCICULE DE BREVET EUROPEEN

(11) **EP 0 616 983 B1**
(45) Date de publication et mention de la délivrance du brevet: **10.05.2000**
(21) Numéro de dépôt: 94400554.5
(22) Date de dépôt: 15.03.1994
(51) Int. Cl.: C03B 7/06, C03B 5/26, C03B 5/187

(54) **Canal d'écoulement pour le transfert de verre en fusion**
Speiserkanal für geschmolzenes Glas
Feeder channel for transferring molten glass

(30) Priorité: 23.03.1993 FR 9303287
(43) Date de publication de la demande: 28.09.1994
(73) Titulaire: SAINT-GOBAIN VITRAGE, 92400 Courbevoie (FR)
(72) Inventeur: Coto Muniz, Jose Antonio, E-22030 Madrid (ES); Grijalba Goicoechea, Luis, E-33400 Aviles (ES); Lemaille, Maurice, F-59500 Douai (FR)
(74) Mandataire: Muller, René

(56) Documents cités:
- DE-A- 3 119 816
- FR-A- 2 550 523
- US-A- 2 941 335
- US-A- 3 231 357

## Description

L'invention concerne un canal d'écoulement pour le transfert du verre en fusion de la zone d'élaboration à la zone de formage dans la fabrication du verre plat.

Dans l'industrie verrière, le verre est élaboré en continu dans un four à flammes ou un four électrique assurant la fusion des matières vitrifiables, et il est ensuite transféré à l'aide d'au moins un canal d'écoulement jusqu'à la zone de formage du verre, c'est-à-dire un dispositif de flottage ou float, ou un dispositif de laminage lorsqu'il s'agit de verre plat, ou des machines de formage lorsqu'il s'agit de verre creux.

Dans les dispositifs connus de fabrication en continu du verre, le canal d'écoulement prend naissance dans un compartiment de conditionnement placé en aval du compartiment ou s'effectue la fusion des matières vitrifiables, et généralement en aval d'un compartiment d'affinage lui-même disposé en aval du compartiment assurant la fusion proprement dite. Le canal a alors pour seule fonction le transfert du verre déjà conditionné et homogénéisé au poste de formage.

Un tel dispositif est décrit par exemple dans la publication de brevet FR-A-2 550 523. Dans ce dispositif, le compartiment de conditionnement encore appelé canal de conditionnement présente des dimensions en section suffisamment importantes pour fonctionner avec un courant de verre de retour et avec un débit pour ce courant de retour voisin de celui de la tirée du verre par ce canal. Ce courant de verre de retour fait partie d'une bande ou courroie de recirculation destinée à homogénéiser le verre.

Ce système de conditionnement avec courroie de recirculation et d'alimentation du poste de formage n'est pas entièrement satisfaisant.

L'invention propose un canal d'écoulement qui assure à la fois le conditionnement du verre en fusion et son transfert au poste de formage avec une qualité d'homogénéisation qui satisfait à toutes les exigences de la fabrication du verre plat, notamment la qualité optique, et en particulier aux exigences du verre plat obtenu par flottage. Dans l'industrie du verre plat, on considère habituellement qu'un verre en fusion est apte à former une feuille de qualité lorsqu'il est livré au poste de formage avec moins de 3 bulles d'air ou de gaz et de préférence avec moins de 1 bulle d'air ou de gaz par dm³ de verre, les bulles devant en outre être d'un diamètre inférieur à 200 µm.

Par canal d'écoulement, on entend selon l'invention l'ensemble du dispositif pour le transfert du verre en fusion de la zone d'élaboration à la zone de formage, ce dispositif comprenant une partie inférieure formant chenal pour le courant de verre, isolée thermiquement par des éléments ou blocs en réfractaires et une partie supérieure isolée thermiquement également et formant une voûte coiffant le chenal.

Le canal d'écoulement selon l'invention disposé entre la zone d'élaboration du verre et la zone de formage comprend des moyens de conditionnement thermique du verre, des moyens d'homogénéisation du verre, notamment des moyens d'homogénéisation thermique, et des moyens dits de structure, la combinaison de ces moyens évitant la formation d'un courant de verre de retour.

Le canal d'écoulement selon l'invention est donc un canal de conditionnement et d'homogénéisation fonctionnant sans courant de verre de retour, c'est-à-dire sans courroie de recirculation traditionnellement destinée à homogénéiser le verre comme décrit précédemment.

Un des avantages du canal sans retour selon l'invention est qu'il évite le problème du verre froid du courant de retour et de la solution onéreuse généralement apportée consistant en un très bon calorifugeage du canal d'écoulement ou un apport thermique important.

En outre, en évitant le courant de retour et le problème lié au verre plus froid, il permet la fabrication de types de verre très différents pouvant aller par exemple d'un verre extra blanc à un verre très foncé.

Selon l'invention, la combinaison des moyens de conditionnement, d'homogénéisation et de structure dont est pourvu le canal permet de limiter à de faibles valeurs les gradients de températures entre les différentes parties d'une section transversale du courant de verre qui sont généralement à l'origine d'une courroie de recirculation.

Selon l'invention, les moyens de structure sont en outre un chenal dépourvu de modifications brusques de section telles que des marches ou des corsets réduisant brusquement la section d'écoulement du verre, ce même chenal présentant en outre une sole ou un fond sensiblement plat et horizontal sur toute son étendue, et des moyens à l'entrée du canal délimitant une section d'entrée égale à la section de sortie dudit canal. Ladite section pour l'écoulement du verre est de préférence sensiblement rectangulaire.

Dans une forme de réalisation préférée du canal les moyens de structure sont notamment tels que le rapport de la hauteur moyenne sur la largeur moyenne du chenal est inférieur à 1 et de préférence inférieur à 0,5.

Pour fonctionner sans courant de verre de retour, il est en outre nécessaire que la quantité de verre élaboré qui pénètre dans le canl soit égale à celle qui s'en échappe et que le débit de courant de verre soit sensiblement le même sur toute la longueur du canal.

A cette fin notamment, selon une forme de réalisation avantageuse du canal selon l'invention, les moyens délimitant le passage pour le verre à l'entrée du chenal sont disposés soit en partie supérieure, soit en partie inférieure ou les deux, et peuvent être formés par un barrage partiel qui avantageusement peut être mobile et :ou réglable ou simplement par un talon disposé sur la sole.

Les moyens d'homogénéisation peuvent comprendre au moins une agitateur mécanique destiné à tremper dans le verre en fusion, de préférence sur essentiellement toute la profondeur du verre, cet agitateur étant animé de préférence d'un mouvement circulaire continu.

Les agitateurs ont avantageusement la forme de cylindres disposés verticalement.

Pour améliorer encore l'homogénéité du verre, de préférence le canal est pourvu d'au moins une série de deux agitateurs disposés l'un à côté de l'autre, transversalement dans le canal, et animés par des mouvements circulaires continus.

Selon une forme de réalisation avantageuse du canal selon l'invention, les agitateurs sont placés dans la partie amont du canal. Cette partie amont peut présenter une largeur plus importante que celle de la partie aval du canal, notamment lorsqu'elle comporte au moins une série de deux agitateurs disposés transversalement.

Selon une forme préférée, le canal est équipé de deux séries de deux agitateurs, toutes deux placées dans la partie amont du canal.

La partie amont plus large se rétrécit de préférence régulièrement et progressivement, notamment pour ne pas favoriser la formation d'un courant de retour.

Les moyens de conditionnement thermique peuvent être choisis parmi des brûleurs à flammes disposés dans les parties latérales de la voûte, au-dessus du chenal. Ces moyens de conditionnement thermique peuvent de manière favorable être répartis sur toute la longueur du canal.

Les moyens de conditionnement thermiques peuvent être aussi des refroidisseurs. Ces refroidisseurs sont alors avantageusement les agitateurs utilisés déjà en tant que moyens d'homogénéisation et qui sont alors pourvus d'une structure interne permettant la circulation d'un fluide de refroidissement tel que de l'eau.

En étant placés dans la partie amont du canal, ces refroidisseurs-agitateurs permettent de réduire rapidement la température du verre de façon homogène, ce qui peut présenter plusieurs avantages dont celui de réduire l'attaque des réfractaires.

Un des objets de l'invention est alors un canal permettant de réduire de plus de 200°C et de façon homogène la température du verre entre l'entrée et la sortie du canal avec une diminution rapide dans la première moitié dudit canal.

Selon une caractéristique avantageuse supplémentaire, le canal selon l'invention peut être muni d'au moins une fente disposée au travers de la sole du chenal et destinée à faire office de purge. En effet, il peut s'avérer que le verre ayant été au contact de la sole ne présente plus l'homogénéité désirée et, dans ce cas, ce verre doit et peut être éliminé par la fente. La fente assurant la purge peut se présenter sous la forme d'au moins une fente étroite continue s'étendant à travers toute la sole, à proximité de l'extrémité de sortie du canal. Le débit de la purge peut avantageusement être réglé selon les besoins, par des modifications des orifices de la fente et/ou de la température de la fente à l'aide de moyens adaptés, par exemple des résistances électriques.

Selon une autre caractéristique avantageuse, le canal selon l'invention est en outre muni de moyens de régulation du niveau de verre, notamment lorsque la cellule dans laquelle prend naissance le canal présente un volume réduit. Ces moyens sont selon une réalisation de l'invention au moins un déversoir de trop plein disposé de préférence dans la partie aval du canal.

Le déversoir peut présenter la forme de deux branches s'échappant de part et d'autre du canal et avantageusement de deux branches perpendiculaires au canal et disposées à une même distance de son extrêmité aval.

La jonction des branches avec le canal présente un seuil à un niveau correspondant au niveau supérieur désiré pour le verre en fusion dans le canal. Passé ce seuil, la profondeur des branches devient plus importante afin notamment d'éviter un retour du verre vers le canal.

Le déversoir précité, outre sa fonction d'assurer le niveau du verre dans le canal peut présenter un autre avantage : celui d'éliminer la partie supérieure du courant de verre par une sorte d'écrémage, cette partie supérieure pouvant être moins homogène que les parties centrales du courant de verre.

Lorsqu'avantageusement le déversoir se présente sous la forme de deux branches, l'écrémage peut se faire de part et d'autre de l'axe médian du courant de verre.

Le canal d'écoulement selon l'invention a pour fonction le transfert du verre élaboré en aval à la machine de formage dans des conditions telles que le verre élaboré conserve ses qualités optiques et qu'il soit livré à ladite machine de formage du verre plat, soit un laminoir, soit un bain float, à la température désirée et homogène thermiquement et en qualité.

Le verre élaboré en aval peut provenir directement d'un compartiment de fusion, notamment d'un compartiment de fusion électrique ou en variante d'un compartiment d'affinage qui suit le compartiment où s'opère la fusion.

En sortie du canal, le verre arrive au dispositif d'apport du verre à la machine de formage par exemple au dispositif de déversement du verre sur un bain float.

L'invention concerne encore un dispositif pour l'alimentation d'une machine de formage du verre plat, notamment un bain float, un laminoir, par un verre élaboré, en fusion, comprenant un compartiment pour la fusion du verre, notamment un compartiment de fusion électrique, et le canal décrit précédemment, ce canal étant selon une réalisation, disposé en aval du compartiment de fusion, directement en aval ou séparé par un simple compartiment de conditionnement, sans compartiment intermédiaire d'affinage, ceci notamment lorsque le compartiment de fusion fonctionne à des températures de fusion plus élevées que les températures habituellement utilisées pour une même composition de verre, par exemple à 1550°C environ pour un verre silico-sodo-calcique, ce qui permet de supprimer tout affinage ultérieur. L'invention concerne aussi un procédé selon la revendication 24 et une utilisation selon la revendication 25.

D'autres avantages et caractéristiques de l'invention apparaitront dans la description suivante d'un exemple de réalisation d'un canal d'écoulement.
La figure 1 est une vue en élévation et en section d'un canal selon l'invention.
La figure 2 est une vue en plan du canal représentée sur la figure 1.
La figure 3 est une section transversale du canal de la figure 1 dans sa partie amont.
La figure 4 est une section transversale du canal au niveau d'un déversoir de trop plein.

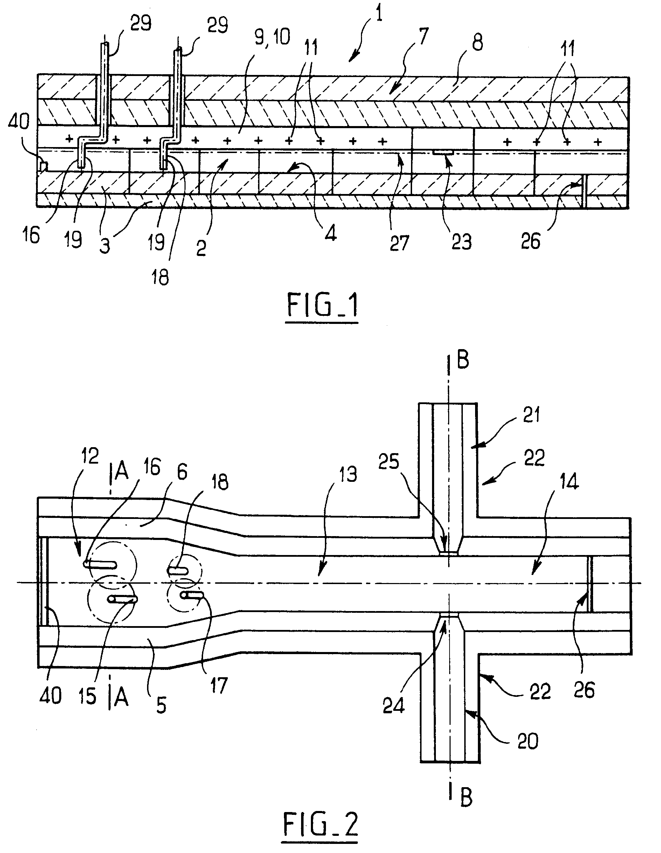

Les figures 1 et 2 représentent schématiquement un canal 1 d'écoulement du verre utilisé ici pour le transfert du verre en fusion, élaboré, à partir d'un compartiment amont non représenté qui peut être un compartiment de fusion notamment de fusion électrique ou une cellule d'affinage qui suit le compartiment de fusion jusqu'à l'alimentation pour le formage. Un compartiment de fusion électrique convenable, équipé d'électrodes immergées dans le bain de verre en fusion est connu généralement sous l'appellation de four électrique à voûte froide ou four à cubilot : ce sont des fours dans lesquels la composition solide de matières vitrifiables, apportée par le dessus, forme une couche supérieure qui recouvre complètement le bain de verre en fusion. Le transfert du verre par le canal s'opère vers l'aval jusqu'au dispositif d'alimentation du poste de formage par exemple ici un bain float non représenté.

Le canal 1 comprend le chenal d'écoulement 2 formé à partir d'éléments en réfractaires 3 et constitué d'une sole 4 et de deux parois latérales 5, 6, et une voûte 7 en réfractaires formée d'un toit 8 et de parties latérales 9, 10 équipées de brûleurs 11.

La sole 4 du chenal 2 est sensiblement horizontale. Le canal 2 présente une partie amont 12 plus large qui se rétrécit pour atteindre les dimensions de la partie médiane 13 et aval 14, de façon régulière et progressive.

Dans cette partie amont 12 élargie sont disposées verticalement deux séries de deux agitateurs 15, 16, 17, 18 constituées chacune d'un cylindre 19 pouvant être animé, comme représenté en traits mixtes, d'un mouvement circulaire uniforme autour de leur axe vertical 29 traversant le toit 8.

Au deux tiers de la longueur du canal environ, celui-ci présente deux branches perpendiculaires 20, 21 ou canaux secondaires construits en réfractaires, formant un déversoir de trop plein 22 destiné à réguler le niveau du verre en fusion dans le canal.

Le niveau inférieur 23 des deux jonctions 24, 25 correspond à cet effet au niveau désiré pour le verre en fusion.

Dans la partie aval du canal est avantageusement prévue une fente 26 dans la sole, faisant office de purge pour le verre ayant été au contact de la sole. L'extrémité de sortie de la fente peut être de section réglable.

Un talon 40 disposé transversalement sur toute la largeur de la sole 4 à l'extrémité amont du canal délimite la section d'entrée pour le verre en fusion.

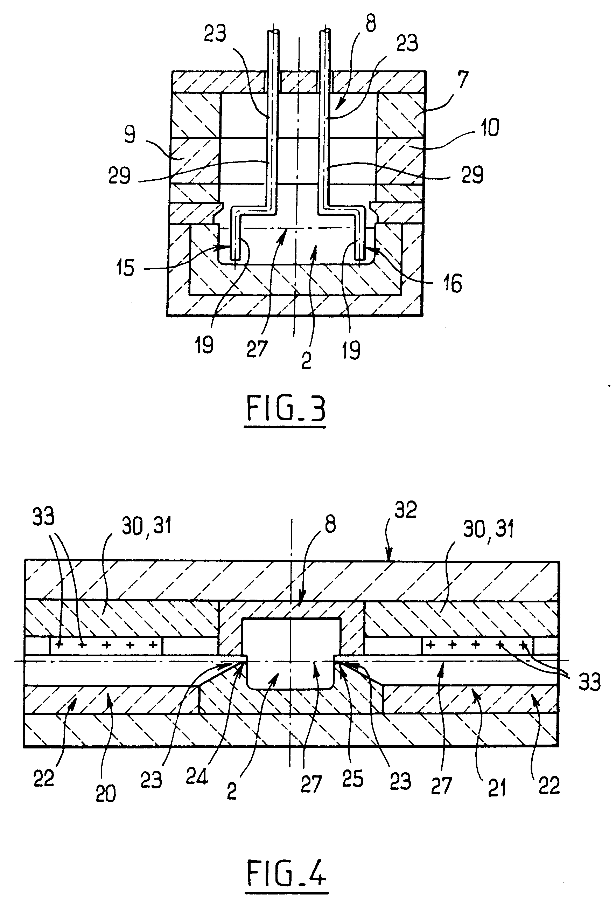

Sur la figure 3 qui est une vue schématique en section transversale selon A-A sont représentés les deux agitateurs amont 15, 16. La ligne mixte 27 représente le niveau du verre en fusion dans le canal.

Les agitateurs 15, 16 sont avantageusement en forme de manivelle et constitués d'une partie active formée de cylindres verticaux 19 placés au bout de bras 23 issus d'axes verticaux 29. Les mouvements de rotation comme figurés en traits mixtes sur la figure 2 sont assurés par des moteurs non représentés.

Les cylindres verticaux plongent dans le verre en fusion jusqu'à proximité de la sole 4 du canal de façon à agiter le verre sur toute la profondeur du chenal.

Les agitateurs sont notamment en acier inoxydable ou en acier doux, avantageusement recouverts d'une couche offrant une grande résistance à l'attaque par le verre en fusion, par exemple une couche de platine.

Les agitateurs sont avantageusement pourvu de moyens internes de refroidissement (non représentés) destinés à baisser la température du verre en fusion pour l'amener le plus rapidement à la température d'utilisation désirée.

La figure 4 est une vue schématique en section transversale selon B-B correspond au plan vertical passant par l'axe du déversoir de trop plein.

Les deux branches 20, 21 du déversoir de trop plein 22 communiquent avec le chenal 2 par deux jonctions 24, 25 dont les seuils 23 sont disposés au niveau désiré pour le verre en fusion dans le chenal. Afin d'éviter un retour du verre passant dans ces deux branches, la profondeur de ces branches s'accroît rapidement à partir des seuils jusqu'à un niveau suffisant.

Les parois latérales 30, 31 de la partie supérieure 32 de ces deux branches sont équipées de brûleurs 33 permettant le cas échéant un réchauffement du verre s'échappant par le déversoir.

Le dispositif fonctionne de la manière suivante dans le cas par exemple d'un verre silico-sodo-calcique. Le verre en fusion élaboré en amont du canal dans un four de fusion électrique arrive à l'entrée du canal à une température de l'ordre de 1450°C environ. Après passage dans la zone des agitateurs-refroidisseurs animés d'un mouvement circulaire, le verre est à une température d'environ 1250°C. Cette baisse rapide de la température permet notamment de limiter la corrosion des réfractaires. Le verre homogène est finalement délivré à une température d'environ 1150°C au dispositif de déversement (non représenté) pour l'alimentation d'un bain float.

Le niveau du verre dans le canal est assuré dans cet exemple par le déversoir de trop plein. On élimine de ce fait environ 0,5 à 5 % de la quantité de verre entrant dans le canal.

Au moins une partie du verre qui a été au contact de la sole est éliminé par la purge 26. Cette partie éliminée correspond à environ 0,1 à 0,5 % du verre entrant dans le canal.

Le dispositif selon l'invention peut être utilisé pour le transfert d'une grande variété de types de verre. Une application particulièrement avantageuse est une utilisation dans la fabrication de verres plats de couleur foncée et très foncée connus généralement pour leur très faible transmission thermique à l'état de verre en fusion.

Un exemple de verre coloré foncé peut être celui décrit dans la publication de brevet EP 0 452 207. C'est un verre sodocalcique classique qui comprend, à titre d'agents colorants, de 1,4 à 4 % d'oxyde de fer exprimé en Fe₂O₃ et de 0 à 0,05 % d'oxyde de cobalt, l'oxyde de cobalt étant supérieur à environ 0,02 % lorsque Fe₂O₃ est inférieur à environ 2 %, et, éventuellement, du sélénium et de l'oxyde de chrome, la somme de CoO + Se + Cr₂O₃ pouvant atteindre 0,24 %, ledit verre présentant un facteur de transmission lumineuse globale sous illuminant A égal ou inférieur à environ 20 % et un facteur de transmission énergétique globale égal ou inférieur à environ 12 % pour une épaisseur de 3,85 mm.

Ce verre est plus particulièrement utilisé pour la fabrication d'un vitrage destiné à la réalisation d'un toit ouvrant de véhicule automobile.

Un autre exemple de verre coloré foncé peut être un verre silico-sodo-calcique ayant un facteur de transmission énergétique globale (T_{E}) inférieur au facteur de transmission lumineuse sous illuminant A (TL_{A}), le facteur T_{E} étant compris entre 10 et 48 % et le facteur TL_{A} entre 20 et 60 % pour une épaisseur de 3,85 mm ; ce verre comprend (en % en poids) à titre d'agents colorants de 0,45 à 2,5 % de Fe₂O₃ (fer total), de 0,001 à 0,02 % de CoO, de 0 à 0,0025 % de Se et de 0 à 0,1 % de Cr₂O₃.

## Revendications

1. Canal d'écoulement (1) comprenant un chenal (2) et une voûte (7) utilisé dans la fabrication du verre plat, pour le passage du verre en fusion, de la zone d'élaboration du verre à la zone de formage, des moyens de conditionnement thermique du (11;15-18) verre, des moyens d'homogénéisation (15-18) du verre, notamment des moyens d'homogénéisation thermique, et des moyens de structure tels qu'un rapport de la hauteur moyenne sur la largeur moyenne du canal inférieur à 1, ***caractérisé en ce que*** les moyens de structure sont en outre un chenal (2) présentant une forme sans modification brusque de section telle que marche ou corset réduisant brusquement la section d'écoulement du verre, une sole (4) sensiblement plate et horizontale sur toute son étendue et des moyens (40) à l'entrée du canal délimitant une section d'entrée égale à la section de sortie dudit canal, la combinaison de ces moyens de conditionnement, d'homogénéisation et de structure évitant la formation d'un courant de verre de retour en limitant à de faibles valeurs les gradients de températures entre les différentes parties d'une section transversale du courant de verre.

2. Canal (1) selon la revendication 1, ***caractérisé en ce que*** les moyens de structure sont tels que le rapport de la hauteur moyenne sur la largeur moyenne du canal est inférieur à 0,5.

3. Canal (1) selon l'une des revendications 1 ou 2, ***caractérisé en ce que*** les moyens d'homogénéisation du verre comprennent au moins un agitateur (15, 16, 17, 18) animé d'un mouvement circulaire.

4. Canal (1) selon la revendication 3, ***caractérisé en ce que*** l'agitateur (15, 16, 17, 18) est disposé dans la partie amont (12) du canal.

5. Canal (1) selon l'une des revendications 3 ou 4, ***caractérisé en ce que*** la partie active (19) de l'agitateur (15, 16, 17, 18) a une forme extérieure cylindrique.

6. Canal (1) selon l'une des revendications 3 à 5, ***caractérisé en ce que*** l'agitateur (15, 16, 17, 18) a une forme de manivelle.

7. Canal (1) selon l'une des revendications précédentes, ***caractérisé en ce que*** les moyens d'homogénéisation comprennent au moins deux agitateurs (15,16) disposés transversalement et animés de mouvements circulaires.

8. Canal (1) selon l'une des revendications précédentes, ***caractérisé en ce que*** les moyens de conditionnement thermique sont choisis parmi des brûleurs (11) et des refroidisseurs.

9. Canal (1) selon la revendication 8, ***caractérisé en ce que*** les refroidisseurs sont des agitateurs (15, 16, 17, 18) utilisés en tant que moyens d'homogénéisation.

10. Canal (1) selon l'une des revendications précédentes, ***caractérisé en ce que*** sa partie amont (12) est plus large que sa partie aval (14) et en ce qu'elle se rétrécit régulièrement et progressivement.

11. Canal (1) selon l'une des revendications précédentes, **caractérisé en que** sa sole (1) est muni d'une purge (26).

12. Canal (1) selon la revendication 11, ***caractérisé en ce que*** la purge (26) est une fente transversale disposée dans la partie aval du canal sur toute la largeur du chenal (2) et dont le débit de préférence peut être régulé.

13. Canal (1) selon l'une des revendications précédentes, ***caractérisé en ce que*** les moyens délimitant l'entrée sont un barrage destiné à être partiellement ou totalement immergé dans le verre en fusion.

14. Canal (1) selon la revendication 13, ***caractérisé en ce que*** le barrage est un talon (40) disposé sur la sole (4).

15. Canal (1) selon la revendication 14, ***caractérisé en ce que*** le barrage est mobile.

16. Canal (1) selon l'une des revendications précédentes, ***caractérisé en ce qu'il*** est muni en outre de moyens (22) de régulation de niveau.

17. Canal (1) selon la revendication 16, ***caractérisé en ce que*** les moyens de régulation de niveau sont au moins un déversoir (22) de trop plein.

18. Canal (1) selon la revendication 17, ***caractérisé en ce que*** le déversoir de trop plein (22) est disposé dans la partie aval (4) du canal.

19. Canal (1) selon l'une des revendications 17 ou 18, ***caractérisé en ce que*** le déversoir de trop plein (22) est formé de deux branches (20, 21) disposées de part et d'autre du canal.

20. Canal (1) selon la revendication 19, ***caractérisé en ce que*** les deux branches (20, 21) sont perpendiculaires au canal.

21. Dispositif pour l'alimentation d'une machine de formage du verre plat, notamment un bain float, par un verre élaboré, en fusion, comprenant un compartiment pour la fusion du verre et un canal (1) pour le transfert du verre à la machine de formage, ***caractérisé en ce que*** le canal est un canal sans retour selon l'une des revendications précédentes.

22. Dispositif selon la revendication 21, ***caractérisé en ce que*** le canal (1) est disposé directement en aval du compartiment pour la fusion ou séparé par un simple compartiment de conditionnement, sans compartiment d'affinage intermédiaire.

23. Dispositif selon la revendication 22, ***caractérisé en ce qu'il*** fonctionne à des températures de fusion plus élevées que les températures habituellement utilisées pour une même composition de verre, notamment à 1550°C environ pour un verre silico-sodo-calcique.

24. Procédé pour le passage direct du verre en fusion de la zone d'élaboration du verre à la zone de formage, ***caractérisé en ce que*** le verre élaboré s'écoule dans le canal d'écoulement selon l'une des revendications 1 à 20 disposé entre ces deux zones, en étant conditionné et homogénéisé sans courant de retour.

25. Utilisation du canal (1) selon l'une des revendications 1 à 20 pour l'alimentation d'un bain float par du verre en fusion.

26. Utilisation du canal (1) selon la revendication 25 pour l'alimentation d'un bain float par du verre en fusion élaboré par fusion électrique.

27. Utilisation du canal (1) selon la revendication 25 ou 26, ***caractérisée en ce que*** le verre est un verre de couleur foncée ou très foncée.

## Claims

1. Flow channel (1) comprising a canal (2) and a roof (7) used in the manufacture of flat glass, for passage of the molten glass from the glass melting area to the forming area, and means of thermal conditioning (11; 15-18) of the glass, means (15-18) of homogenising the glass, notably thermal homogenisation means, and structure means such that a ratio of the mean height to the mean width of the channel is less than 1, characterised in that the structure means are also a canal (2) having a shape without abrupt change in cross-section such as a step or neck abruptly reducing the cross-section of flow of the glass, a floor (4) which is substantially flat or horizontal over its entire extent and means (40) at the entry to the channel delimiting an entry cross-section equal to the exit cross-section of the channel, the combination of these conditioning, homogenisation and structure means preventing the formation of a return glass flow by limiting to low values the temperature gradients between the different parts of a transverse section of the glass flow.

2. Channel (1) according to Claim 1, characterised in that the structure means are such that the ratio of the mean height to the mean width of the channel is less than 0.5.

3. Channel (1) according to one of Claims 1 or 2, characterised in that the means of homogenising the glass comprise at least one stirrer (15, 16, 17, 18) driven in a circular movement.

4. Channel (1) according to Claim 3, characterised in that the stirrer (15, 16, 17, 18) is disposed in the upstream part (12) of the channel.

5. Channel (1) according to one of Claims 3 or 4, characterised in that the active part (19) of the stirrer (15, 16, 17, 18) has a cylindrical external shape.

6. Channel (1) according to one of Claims 3 to 5, characterised in that the stirrer (15, 16, 17, 18) has the shape of a crank.

7. Channel (1) according to one of the preceding claims, characterised in that the homogenisation means comprise at least two stirrers (15, 16) disposed transversely and driven in circular movements.

8. Channel (1) according to one of the preceding claims, characterised in that the thermal conditioning means are chosen from amongst burners (11) and coolers.

9. Channel (1) according to Claim 8, characterised in that the coolers are stirrers (15, 16, 17, 18) used as homogenisation means.

10. Channel (1) according to one of the preceding claims, characterised in that its upstream part (12) is wider than its downstream part (14) and in that it narrows evenly and progressively.

11. Channel (1) according to one of the preceding claims, characterised in that its floor (1) is provided with a drain (26).

12. Channel (1) according to Claim 11, characterised in that the drain (26) is a transverse slot disposed in the downstream part of the channel over the entire width of the canal (2) and whose flow rate can preferably be regulated.

13. Channel (1) according to one of the preceding claims, characterised in that the means delimiting the entry are a dam intended to be partially or totally immersed in the molten glass.

14. Channel (1) according to Claim 13, characterised in that the dam is a heel (40) disposed on the floor (4).

15. Channel (1) according to Claim 14, characterised in that the dam is movable.

16. Channel (1) according to one of the preceding claims, characterised in that it is also provided with level-regulation means (22).

17. Channel (1) according to Claim 16, characterised in that the level-regulation means are at least an overflow spout (22).

18. Channel (1) according to Claim 17, characterised in that the overflow spout (22) is disposed in the downstream part (4) of the channel.

19. Channel (1) according to one of Claims 17 or 18, characterised in that the overflow spout (22) is formed by two branches (20, 21) disposed on each side of the channel.

20. Channel (1) according to Claim 19, characterised in that the two branches (20, 21) are perpendicular to the channel.

21. Device for feeding a machine for forming flat glass, notably a tin bath, with a molten glass, comprising a compartment for melting the glass and a channel (1) for transferring the glass to the forming machine, characterised in that the channel is a non-return channel according to one of the preceding claims.

22. Device according to Claim 21, characterised in that the channel (1) is disposed directly downstream of the compartment for melting or separated by a simple conditioning compartment, without any intermediate refining compartment.

23. Device according to Claim 22, characterised in that it functions at higher melting temperatures than the temperatures normally used for the same glass composition, notably at approximately 1550°C for a soda-lime-silica glass.

24. Method for the direct passage of the molten glass from the glass melting area to the forming area, characterised in that the molten glass flows in the flow channel according to one of Claims 1 to 20 disposed between these two areas, being conditioned and homogenised without any return flow.

25. Use of the channel (1) according to one of Claims 1 to 20 for feeding a tin bath with molten glass.

26. Use of the channel (1) according to Claim 25 for feeding a tin bath with molten glass produced by electric melting.

27. Use of the channel (1) according to Claim 25 or 26, characterised in that the glass is a glass with a dark or very dark colour.

## Patentansprüche

1. Fließkanal (1), welcher bei der Herstellung von Flachglas für den Übergang von erschmolzenem Glas vom Herstellungsbereich des Glases in den Formgebungsbereich verwendet wird und eine Leitung (2) und eine Decke (7), Mittel (11; 15 - 18) zur thermischen Konditionierung des Glases, Mittel (15 - 18) zur Homogenisierung des Glases, insbesondere Mittel zur thermischen Homogenisierung, und derartige Strukturmittel umfaßt, daß ein Verhältnis von mittlerer Höhe zu mittlerer Breite des Kanals kleiner als 1 ist, **dadurch gekennzeichnet, daß** die Strukturmittel außerdem eine Leitung (2), die eine Form ohne plötzliche Querschnittsveränderung wie eine Stufe oder Manschette aufweist, durch welche der Strömungsquerschnitt des Glases schnell verringert wird, eine Sohle (4), die im wesentlichen über ihre gesamte Ausdehnung flach und horizontal ist, und Mittel (40) am Kanaleingang sind, durch welche ein Eingangsquerschnitt begrenzt wird, der gleich dem Ausgangsquerschnitt des Kanals ist, wobei durch die Kombination aus diesen Konditionierungs-, Homogenisierungs- und Strukturmitteln die Bildung eines Rückstroms aus Glas verhindert wird, indem die Temperaturgradienten zwischen den verschiedenen Teilen eines Querschnitts des Glasstroms auf niedrige Werte begrenzt werden.

2. Kanal (1) nach Anspruch 1, **dadurch gekennzeichnet, daß** die Strukturmittel derart sind, daß das Verhältnis von mittlerer Höhe zu mittlerer Breite des Kanals kleiner als 0,5 ist.

3. Kanal (1) nach Anspruch 1 oder 2, **dadurch gekennzeichnet, daß** die Mittel zur Homogenisierung des Glases mindestens einen mit einer kreisförmigen Bewegung angetriebenen Rührer (15, 16, 17, 18) enthalten.

4. Kanal (1) nach Anspruch 3, **dadurch gekennzeichnet, daß** der Rührer (15, 16, 17, 18) im hinteren Teil (12) des Kanals angeordnet ist.

5. Kanal (1) nach Anspruch 3 oder 4, **dadurch gekennzeichnet, daß** der aktive Teil (19) des Rührers (15, 16, 17, 18) eine zylindrische äußere Form hat.

6. Kanal (1) nach einem der Ansprüche 3 bis 5, **dadurch gekennzeichnet, daß** der Rührer (15, 16, 17, 18) die Form einer Kurbel hat.

7. Kanal (1) nach einem der vorhergehenden Ansprüche, **dadurch gekennzeichnet, daß** die Homogenisierungsmittel mindestens zwei Rührer (15, 16) enthalten, die quer angeordnet und mit kreisförmigen Bewegungen angetrieben sind.

8. Kanal (1) nach einem der vorhergehenden Ansprüche, **dadurch gekennzeichnet, daß** die Mittel zur thermischen Konditionierung aus Brennern (11) und Kühlern ausgewählt sind.

9. Kanal (1) nach Anspruch 8, **dadurch gekennzeichnet, daß** die Kühler Rührer (15, 16, 17, 18) sind, die als Homogenisierungsmittel verwendet werden.

10. Kanal (1) nach einem der vorhergehenden Ansprüche, **dadurch gekennzeichnet, daß** sein hinterer Teil (12) größer als sein vorderer Teil (14) ist, **und daß** jener sich gleichmäßig und fortschreitend verjüngt.

11. Kanal (1) nach einem der vorhergehenden Ansprüche, **dadurch gekennzeichnet, daß** seine Sohle (4) mit einem Ablaß (26) versehen ist.

12. Kanal (1) nach Anspruch 11, **dadurch gekennzeichnet, daß** der Ablaß (26) ein Schlitz ist, der im vorderen Teil des Kanals über die gesamte Breite der Leitung (2) quer angeordnet ist und dessen Durchfluß vorzugsweise geregelt werden kann.

13. Kanal (1) nach einem der vorhergehenden Ansprüche, **dadurch gekennzeichnet, daß** die Mittel, welche den Eingang begrenzen, ein Wehr sind, das vorgesehen ist, in das erschmolzene Glas teilweise oder vollständig einzutauchen.

14. Kanal (1) nach Anspruch 13, **dadurch gekennzeichnet, daß** das Wehr ein auf seiner Sohle (4) angeordneter Ansatz (40) ist.

15. Kanal (1) nach Anspruch 14, **dadurch gekennzeichnet, daß** das Wehr beweglich ist.

16. Kanal (1) nach einem der vorhergehenden Ansprüche, **dadurch gekennzeichnet, daß** er außerdem mit Mitteln (22) zur Niveauregelung versehen ist.

17. Kanal (1) nach Anspruch 16, **dadurch gekennzeichnet, daß** die Mittel zur Niveauregelung mindestens ein Überlauf (22) sind.

18. Kanal (1) nach Anspruch 17, **dadurch gekennzeichnet, daß** der Überlauf (22) im vorderen Teil (14) des Kanals angeordnet ist.

19. Kanal (1) nach Anspruch 17 oder 18, **dadurch gekennzeichnet, daß** der Überlauf (22) aus zwei auf beiden Seiten des Kanals angeordneten Abzweigen (20, 21) gebildet ist.

20. Kanal (1) nach Anspruch 19, **dadurch gekennzeichnet, daß** die zwei Abzweige (20, 21) quer zum Kanal stehen.

21. Vorrichtung zur Versorgung einer Formgebungsmaschine für Flachglas, insbesondere eines Floatbades, mit erschmolzenem hergestelltem Glas, welche ein Abteil für das Erschmelzen des Glases und ein Kanal (1) für den Transport des Glases zur Formgebungsmaschine umfaßt, **dadurch gekennzeichnet, daß** der Kanal ein rückstromfreier Kanal nach einem der vorhergehenden Ansprüche ist.

22. Vorrichtung nach Anspruch 21, **dadurch gekennzeichnet, daß** der Kanal (1) direkt nach dem Abteil für das Erschmelzen oder getrennt durch ein einfaches Konditionierungsabteil ohne dazwischenliegendes Läuterungsabteil angeordnet ist.

23. Vorrichtung nach Anspruch 22, **dadurch gekennzeichnet, daß** sie bei Schmelztemperaturen, die höher als die Temperaturen sind, welche üblicherweise für dieselbe Glaszusammensetzung angewendet werden, insbesondere bei etwa 1550 °C für ein Kalk-Natron-Silicatglas, arbeitet.

24. Verfahren für den direkten Übergang von erschmolzenem Glas vom Herstellungsbereich des Glases in den Formgebungsbereich, **dadurch gekennzeichnet, daß** das hergestellte Glas in den zwischen diesen beiden Bereichen angeordneten Fließkanal gemäß einem der Ansprüche 1 bis 20 strömt, wobei es rückstromfrei konditioniert und homogenisiert wird.

25. Verwendung des Kanals (1) nach einem der Ansprüche 1 bis 20 für die Versorgung eines Floatbades mit erschmolzenem Glas.

26. Verwendung des Kanals (1) nach Anspruch 25 für die Versorgung eines Floatbades mit durch Elektroschmelze hergestelltem erschmolzenem Glas.

27. Verwendung des Kanals (1) nach Anspruch 25 oder 26, **dadurch gekennzeichnet, daß** das Glas ein Glas mit dunkler oder sehr dunkler Farbe ist.
